# EUROPEAN PATENT APPLICATION

(11) **EP 2 824 386 A1**
(43) Date of publication of application: **14.01.2015**
(21) Application number: 13003486.1
(22) Date of filing: 10.07.2013
(51) Int. Cl.: F21S 9/03, F21S 8/08, G09F 27/00, G09F 15/00, G09F 13/00, H05B 37/02, H05B 37/00

(54) **Bus stop supplied by renewable sources**

(71) Applicant: Coremate Technical Co., Ltd., Taoyuan (TW)
(72) Inventor: Wang, Robert, Taoyuan (TW)
(74) Representative: Zeitler - Volpert - Kandlbinder

(57) **Abstract**

An electricity self-supply type bus stop includes a fixed rod (10) provided with a complex stop board (20) and an upper shed (30). The upper shed has an inner peripheral side installed with an illuminating lamp (40) and an outer peripheral side disposed with an indicating lamp (50) positioned over the illuminating lamp. The fixed rod further has at least one power generation (60, 80) device secured thereon. By so designing, the electricity self-supply type bus stop can self-supply electric power for creating a bright waiting environment to increase safety of passengers waiting to take buses at night and also enable the passengers to read the information on the complex stop board and for starting the indicating lamp to emit light to let an approaching bus know that there are passengers waiting to take the bus at the stop, thus increasing safety of the passengers waiting at the stop at night and conforming to economic gains.

## Description

### BACKGROUND OF THE INVENTION

### 1. Field of the Invention

This invention relates to an electricity self-supply type bus stop.

### 2. Description of the Prior Art

A conventional bus stop includes a fixed rod provided thereon with a stop plate but provided with no lighting device; therefore, during night time, the bus stop will be gloomy with insufficient light and it may become a blind angle of public security and in this case, people waiting to take buses at the stop with dim light or at night will worry about their safety. In addition, in the dim light, a bus driver is usually unable to clearly see whether or not there is any passenger waiting to take buses at the stop and hence a situation of the bus skipping the stop may occur, thus causing trouble to people who are waiting to take a bus.

In view of the drawbacks mentioned above, the inventor of this invention devises this invention for ameliorating the conventional bus stop.

### SUMMARY OF THE INVENTION

The objective of this invention is to offer an electricity self-supply type bus stop, able to self-supply electric power for lighting waiting environment to increase safety of passengers who are waiting to take buses in dim environment in daytime or at night and also for enabling an approaching bus to clearly know that there are passengers waiting to take the bus at the stop.

The electricity self-supply type bus stop in the present invention includes a fixed rod secured thereon with a complex stop board having a plurality of bus route maps provided thereon. A waiting button is positioned at a lower edge of the bus route maps, and a sensor is installed on the complex stop board for sensing intensity of light. The fixed rod is further provided thereon with an upper shed positioned over the complex stop board, and an illuminating lamp is mounted at an inner peripheral side of the upper shed and connected with the sensor so that the illuminating lamp can automatically emit light when lighting is insufficient and also can turn off the light when lighting is sufficient. An indicating lamp is disposed at an outer peripheral side of the upper shed and positioned over the illuminating lamp and further connected with the waiting button so that the indicating lamp can be controlled to send out light by pressing the waiting button. In addition, the fixed rod is secured thereon with at least one power generating device electrically connected with the complex stop board, the illuminating lamp and the indicating lamp for generating electric energy needed by the electricity self-supply type bus stop.

The illuminating lamp of the electricity self-supply type bus stop in the present invention functions to provide sufficient illumination for creating bright waiting environment to increase safety of the passengers waiting for buses in dim environment in daytime or at night and enable the passengers to clearly read the information on the bus route maps when it is getting dark or light is insufficient. Furthermore, the indicating lamp functions to give out light to let an approaching bus clearly know that there are passengers waiting to take the bus at the stop, avoiding the bus skipping the stop without picking up the passengers because line of sight is unclear or it is getting dark and light is insufficient.

### BRIEF DESCRIPTION OF DRAWINGS

This invention will be better understood by referring to the accompanying drawings, wherein:
Fig. 1 is a perspective view of an electricity self-supply type bus stop in the present invention;
Fig. 2 is a perspective view of the electricity self-supply type bus stop viewed from another visual angle in the present invention;
Fig. 3 is a partial magnified view of the electricity self-supply type bus stop in the present invention, showing an interface of a touch panel broadcasting advertisement;
Fig. 4 is a partial magnified view of the electricity self-supply type bus stop in the present invention, showing an interface of the touch panel performing a function of telephone communication;
Fig. 5 is a partial magnified view of the electricity self-supply type bus stop in the present invention, showing an interface of the touch panel performing a function of surfing on the internet;
Fig. 6 is a partial magnified view of the electricity self-supply type bus stop in the present invention, showing that an illuminating lamp and an indicating lamp are provided;
Fig. 7 is a perspective view of the electricity self-supply type bus stop in the present invention, showing a using condition of a well-illuminated environment;
Fig. 8 is a perspective view of the electricity self-supply type bus stop in the present invention, showing that the illuminating lamp functions to give out light; and
Fig. 9 is a perspective view of the electricity self-supply type bus stop in the present invention, showing that the indicating lamp functions to send out light.

### DETAILED DESCRIPTION OF THE PREFERRED EMBODIMENT

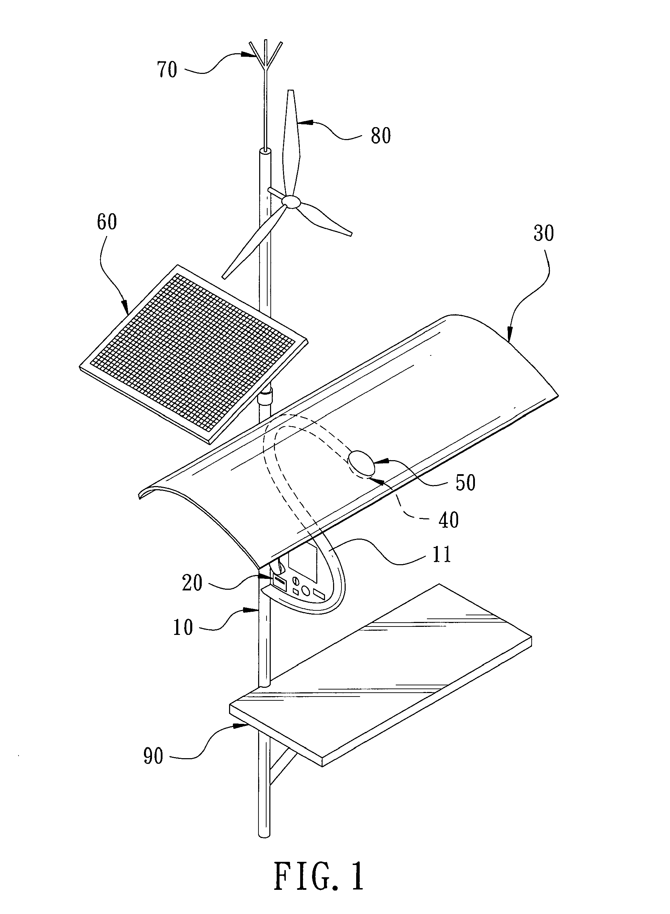

A preferred embodiment of an electricity self-supply type bus stop in the present invention, as shown in Fig. 1, includes a fixed rod 10, a complex stop board 20, an upper shed 30, an illuminating lamp 40, an indicating lamp 50, a solar module 60, an antenna 70, a wind turbine generator unit 80 and a seat 90 combined together.

The fixed rod 10 has one side provided with an S-shaped extension rod 11.

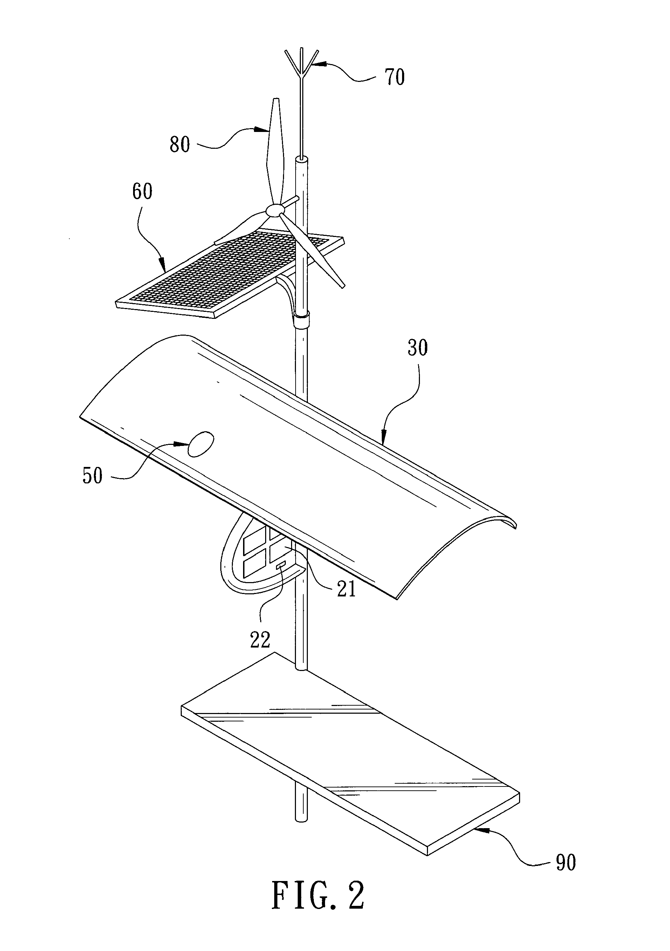

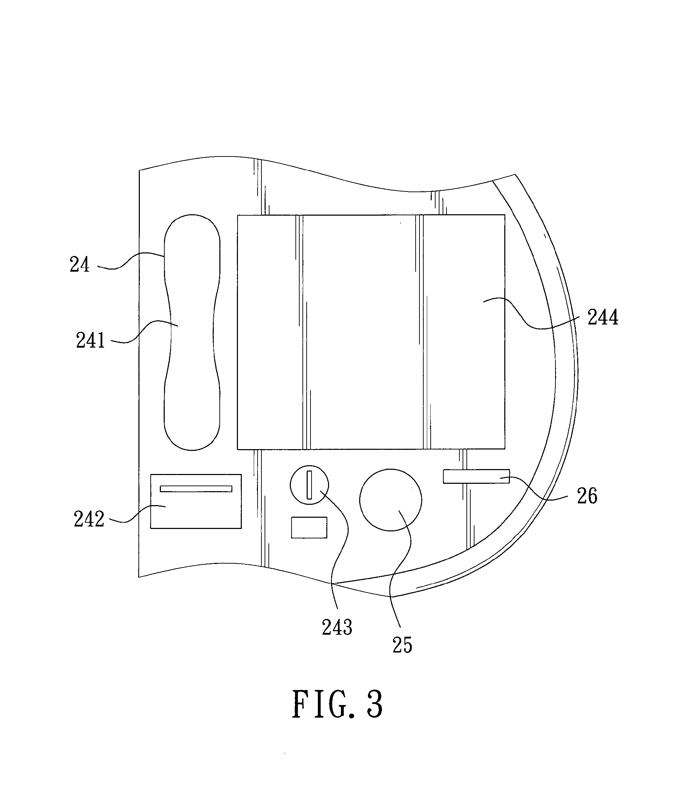

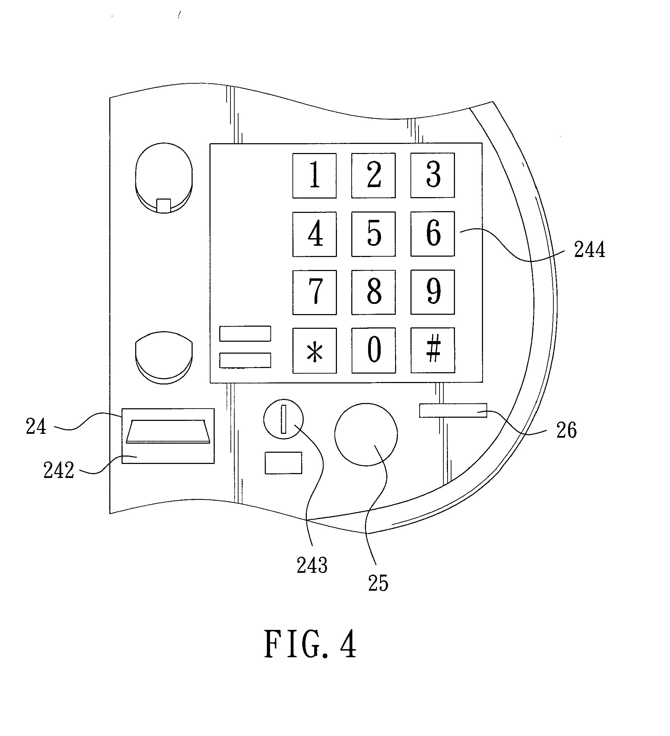

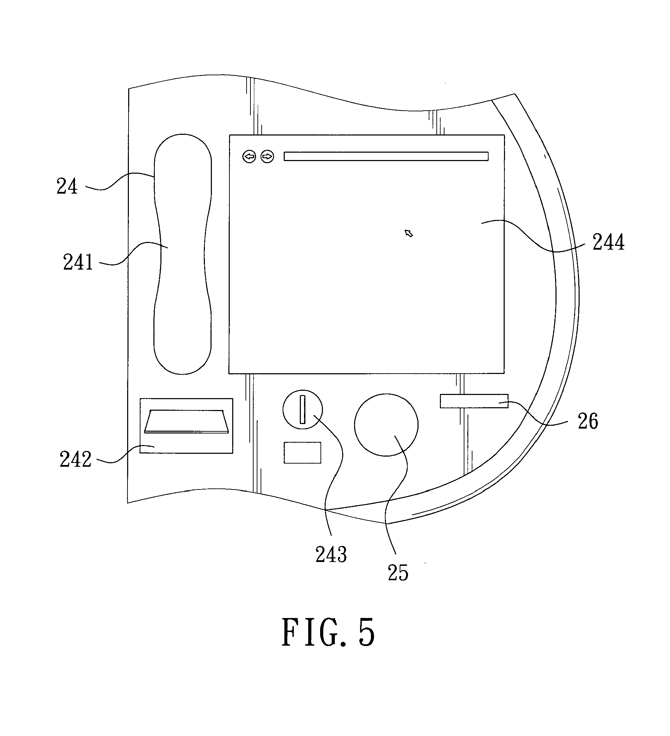

The complex stop board 20 is secured between the fixed rod 10 and the S-shaped extension rod 11. Referring to Fig. 2, the complex stop board 20 has one side disposed with a plurality of bus route maps 21 respectively marking different routes and timetables of various bus routes, and a waiting button 22 is further set at a location under the bus route maps 21. Referring to Figs. 1 and 3, the complex stop board 20 has another side installed with a multi-functional telephone 24 provided thereon with a transmitter 241, and a card insertion slot 242 and a coin slot 243 are respectively provided beneath the transmitter 241 for a user to optionally use a card or a coin and further, a touch panel 244 is mounted beside the transmitter 241. Referring to Figs. 3-5, the touch panel 244 can be employed for broadcasting advertisement and, when a user picks up the transmitter 241, can reveal number press keys for the user to touch and operate for communication by the telephone 24. Furthermore, the multi-functional telephone 24 has a function of surfing the internet after a user inserts a card in the card insertion slot 242 or put a coin in the coin slot 243 for touching and operating the touch panel 244. An emergency button 25 is further provided beneath the multi-functional telephone 24 and connected with the multi-functional telephone 24 so that a user can press the emergency button 25 to send out a distress signal and directly make connection with the unit concerned via the multi-functional telephone 24. Moreover, the complex stop board 20 is installed with a sensor 26 for sensing intensity of light. In this invention, the sensor 26 is positioned beneath the multi-functional telephone 24 but this is only a preferred embodiment of this invention, not confined in location.

The upper shed 30 is assembled on the fixed rod 10 and positioned over the complex stop board 20 to shelter from the rain and protect from the sunlight.

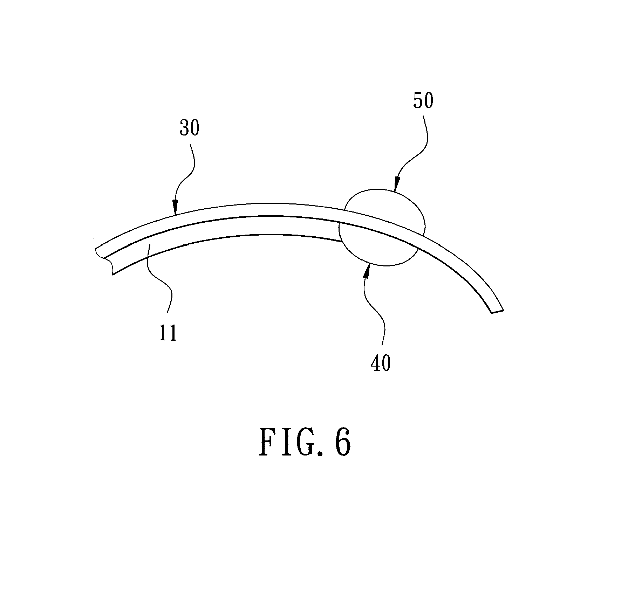

The illuminating lamp 40, referring to Fig. 6, is installed at the inner peripheral side of the upper shed 30 to emit light for illumination, and referring to Figs. 1 and 3, the illuminating lamp 40 is connected with the sensor 26. Thus, the illuminating lamp 40 can automatically send out light via the sensor 26 when it is getting dark with insufficient lighting, and the illuminating lamp 40 will turn off light when it is bright with sufficient illumination.

The indicating lamp 50, referring to Fig. 6, is provided at an outer peripheral side of the upper shed 30 and positioned over the illuminating lamp 40. Referring to Figs. 1 and 2, the indicating lamp 50 is connected with the waiting button 22, able to be controlled to give out light when the waiting button 22 is pressed and able to automatically extinguish the light after illuminating for a period of time.

The solar module 60, which is one of the power generation devices of this invention, is secured on the fixed rod 10, able to be adjusted in locking position and in height. The solar module 60 is electrically connected with the complex stop board 20, the illuminating lamp 40 and the indicating lamp 50 and is not covered by the upper shed 30 for generating solar power. The solar module 60 has a built-in rechargeable battery module for storage of the electrical energy generated by solar power, which is needed by the electricity self-supply bus stop.

The antenna 70 is firmly assembled at the top edge of the fixed rod 10 and connected with the multi-functional telephone 24 for communication transmission, able to serve as a communication base station.

The wind turbine generator unit 80, which is one of the power generating devices of this invention, is secured on the fixed rod 10 and electrically connected with the complex stop board 20, the illuminating lamp 40 and the medicating lamp 50 for generating electric energy needed by the electricity self-supply bus stop.

The seat 90 is firmly secured at a proper location on the fixed rod 10 for users to sit and rest thereon.

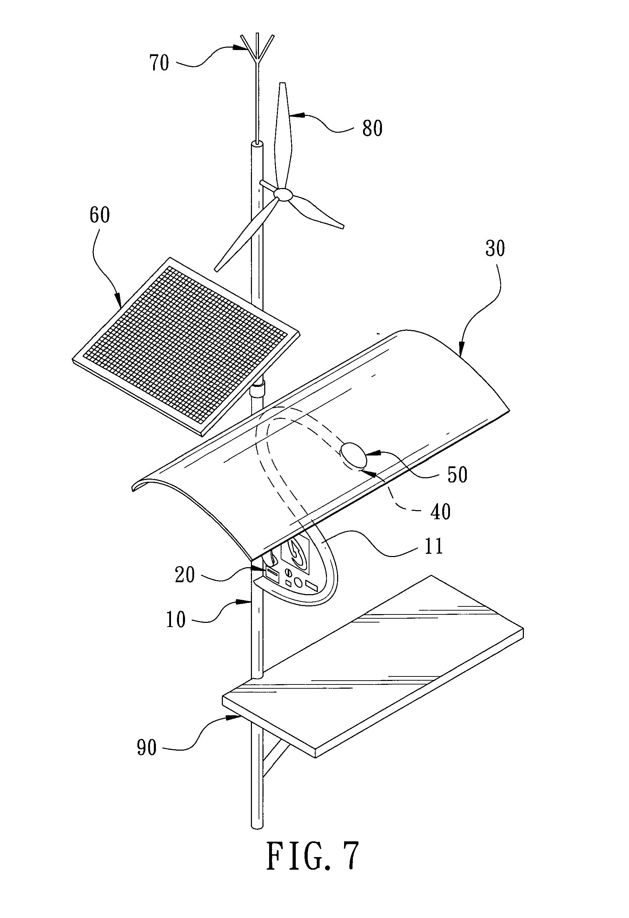

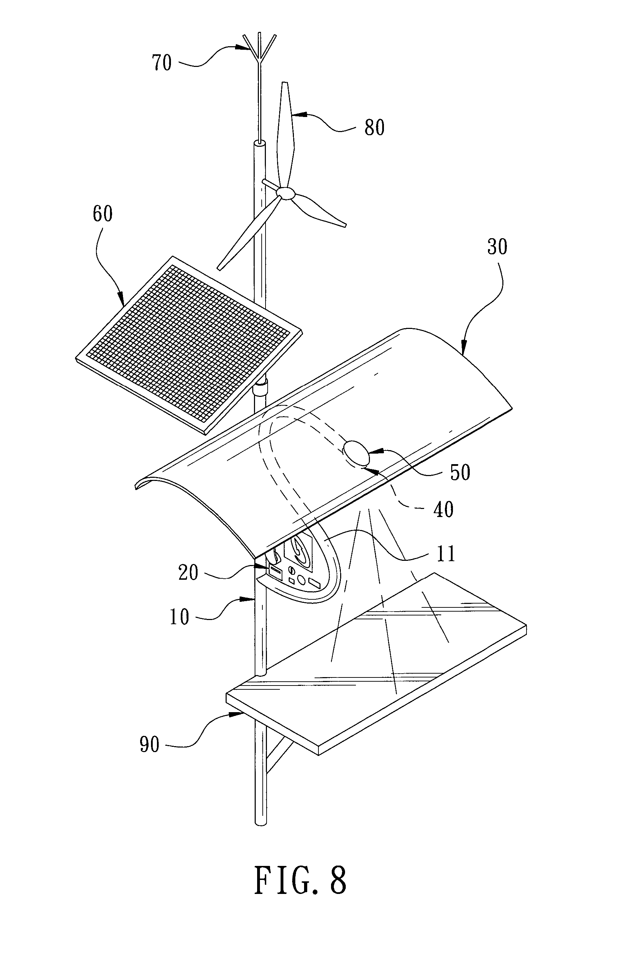

In using, referring to Figs. 7 and 8 and Figs. 2-5, when it is bright with sufficient illumination, the solar module 60 of the electricity self-supply bus stop can generate electricity needed by the electricity self-supply bus stop for supplying the multi-function telephone 24 with electricity for broadcasting advertisement, or performing telephone communication or surfing the internet so that users can divert themselves from boredom of waiting a bus to come, and the surplus electric energy can be stored in the solar module 60 to be reused. In addition, the wind turbine generator unit 80 of the electricity self-supply type bus stop can generate electricity by wind power and supply the electric energy for the electricity self-supply type bus stop, thus enabling the electricity self-supply type bus stop to generate electricity in multiple modes and hence able to supply sufficient electric power by itself. When the sensor 26 senses that it is dim or lighting is insufficient, the illuminating lamp 40 will be started by the sensor 26 to send out light. By so designing, the electricity self-supply type bus stop of this invention is able to be provided with a bright waiting environment with sufficient illumination for increasing safety of passengers who are waiting for buses in dim environment in daytime or at night and also enabling passengers to clearly read the information on the bus route maps 21 when it is getting dark or lighting is insufficient.

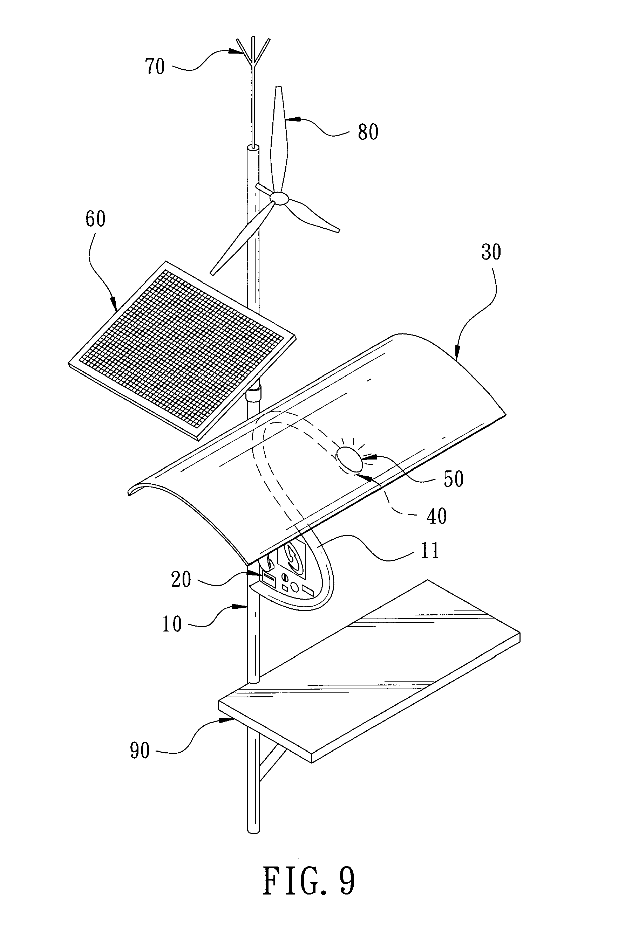

Fig. 9 shows a using condition of the indicating lamp 50. When a user wants to take a bus that is approaching the electricity self-supply bus stop, simply press the waiting button 22 to control the indicating lamp 50 to emit light to let the bus approaching know that there are passengers waiting at the electricity self-supply type bus stop, thus eliminating the defect of the conventional bus stop that the driver of a bus approaching the stop is unaware that there are passengers waiting at the stop because it is dim with insufficient lighting. After the waiting button 22 is pressed to start the indicating lamp 50 to emit light, the light of the indicating lamp 50 will be extinguished automatically after lighting for a period of time, thus able to prevent next bus from misunderstanding that there are passengers waiting at the stop and further save electric energy generated by the solar module 60.

The special feature of this invention is that the solar module 60, the wind turbine generator unit 80 and the antenna 70 are respectively an integrated module, which can be exchanged in position and secured at the upper edge of the fixed rod 10, facilitating maintenance and replacement and position adjustment for obtaining maximum efficacy.

While the preferred embodiment of the invention has been described above, it will be recognized and understood that various modifications may be made therein and the appended claims are intended to cover all such modifications that may fall within the spirit and scope of the invention.

## Claims

1. An electricity self-supply type bus stop comprising:
a fixed rod;
a complex stop board, said complex stop board secured on said fixed rod, said complex stop board provided thereon with a plurality of bus route maps, a waiting button disposed at a lower edge of said bus route maps, said complex stop board installed with a sensor, said sensor sensing intensity of light;
an upper shed, said upper shed secured on said fixed rod and positioned over said complex stop board;
an illuminating lamp, said illuminating lamp installed at an inner peripheral side of said upper shed, said illuminating lamp connected with said sensor;
an indicating lamp, said indicating lamp assembled at an outer peripheral side of said upper shed and positioned over said illuminating lamp, said indicating lamp connected with said waiting button; and
at least one power generating device, said power generating device set on said fixed rod, said power generating device electrically connected with said complex stop board and said indicating lamp.

2. The electricity self-supply type bus stop as claimed in Claim 1, wherein said power generation device is a solar module.

3. The electricity self-supply type bus stop as claimed in Claim 1, wherein said power generating device is a wind turbine generator unit.

4. The electricity self-supply type bus stop as claimed in Claim 1, wherein said complex stop board is installed thereon with a multi-functional telephone, said multi-functional telephone disposed with a transmitter, and a card insertion slot and a coin slot are respectively provided beneath said transmitter, a touch panel positioned beside said transmitter.

5. The electricity self-supply type bus stop as claimed in Claim 1, wherein said complex stop board is assembled thereon with an emergency button.

6. The electricity self-supply type bus stop as claimed in Claim 4, wherein said fixed rod has a top edge installed with an antenna, said antenna connected with said multi-functional telephone.

7. The electricity self-supply type bus stop as claimed in Claim 1, wherein said fixed rod is provided with an S-shaped extension rod, and said complex stop board is firmly mounted between said fixed rod and said S-shaped rod.

8. The electricity self-supply type bus stop as claimed in Claim 1, wherein said fixed rod is provided with a seat.
